# EUROPÄISCHE PATENTANMELDUNG

(11) **EP 2 522 546 A1**
(43) Veröffentlichungstag der Anmeldung: **14.11.2012**
(21) Anmeldenummer: 11003856.9
(22) Anmeldetag: 11.05.2011
(51) Int. Cl.: B60P 7/06

(54) **Sicherung von Ladegut insbesondere in Staukästen**

(71) Anmelder: Rheinmetall MAN Military Vehicles GmbH, 1230 Wien (AT)
(72) Erfinder: Ganster, Michael, 1080 Wien (AT)
(74) Vertreter: Dietrich, Barbara

(57) **Zusammenfassung**

Vorgeschlagen wird eine Sicherungsvorrichtung für Ladegüter, Gepäckstücke oder sonstiger zu sichernder Objekte (21, 22, 23) in einem Fahrzeug, insbesondere in Stauräumen und Staukästen (20), dass wenigstens ein entfalteter Luftsack (10-14) im Stauraum (20) eingebunden ist, der einen freien Raum (15) zumindest teilweise bevorzugt vollständig ausfüllt, derart, dass die Objekte (21, 22, 23) gegen Verrutschen, Verkanten etc. gesichert sind. Der Luftsack (10-14) kann seinerseits unterschiedliche Geometrien aufweisen, die in der Regel die dem Freiraum (15) im Stauraum (20) geschuldet sind.

## Beschreibung

Die Erfindung beschäftigt sich mit der Sicherung von Ladegut insbesondere in Staukästen durch (Luft-)Bälge, die angepasst an die Menge und Form des Ladegutes in den Stauräumen aufblasbar sind und wieder verwendet werden können.

Speziell bei Geländefahrten kann ungesichertes Ladegut zu Beschädigungen an bzw. in den Staukästen bzw. Stauräumen oder am Ladegut führen. Aus dem zivilen Nutzfahrzeugbereich sind Sicherungen von großem Ladegut vorrangig durch Gurte oder Seile bekannt. Für die Ladungssicherung in Kraftfahrzeugen werden neben Gurten auch Netze, Rollos und dergleichen für die mechanische Sicherung in Kofferräumen eingesetzt. Derartige Sicherungssysteme sind beispielsweise der DE 20 2006 015 662 U1, DE 20 2007 008 184 U1 oder DE 10 2005 052 452 A1 entnehmbar. Bei den derzeitigen militärischen Staukästen bzw. Stauräumen ist das Ladegut durch Spanngurte oder manchmal auch gar nicht geschützt.

Hier stellt sich die Erfindung die Aufgabe, ein Sicherungssystem aufzuzeigen, das in einfacher Art und Weise das Sichern von Ladegut, Gepäck oder dergleichen in einem Staukasten ermöglicht.

Gelöst wird die Aufgabe durch die Merkmale das Patentanspruchs 1. Vorteilhafte Ausgestaltungen sind in den Unteransprüchen aufgeführt.

Der Erfindung liegt die Idee zugrunde, aufblasbare Luftsäcke oder Luftbälge einzubinden, die die Sicherung übernehmen sollen.

Luftsäcke in der Automobilindustrie sind nicht unbekannt. So beschreibt die DE 203 13 622 U1 einen aufblasbaren Dachgepäckträger für Pkw mit montierbarem Gepäcksack. Auch Rückhaltesysteme in Form von sich aufblasbaren Airbags sind hinreichend bekannt.

Aus der DE 10 2006 046 355 A1 ist ein Fahrzeug mit Auftriebskörper für den Schwimmbetrieb des Fahrzeugs bekannt, wobei die aufblasbaren Auftriebskörper außen am Fahrzeug, beispielsweise in vorhandene Staukästen im nicht aufgeblasenen Zustand integriert sind.

Die für die Ladungssicherung verwendeten Luftsäcke hingegen sind jedoch im Nutzungsfall aufgeblasen bzw. befüllt und bevorzugt vorgeformt, wodurch sie sich der Form des Ladegutes anpassen sowie Toträume ausfüllen können, um so ein Verrutschen, Verkannten etc. der Ladung zu verhindern. Die Fixierung des Ladegutes erfolgt nunmehr durch (wieder verwendbare) Luftsäcke, unabhängig vom Grad der Beladung der Stauräume.

Ein weiterer sich mit der Idee verbindender Vorteil liegt darin, dass unabhängig der Form der Staukästen eine einfache Sicherung möglich ist. Bekanntlich weisen Standardstaukästen eine Rechtecks- oder Dreiecksform auf. Für diese Formen sollte die Grundfläche der Luftbälge rechteckig oder dreieckig sein. Die das Ladegut umspielende Seite, beispielweise die Bodenfläche, kann wellenförmig, eben, schräg oder schief ausgeführt sein, also je nach Verwendungsfall dem Ladegut optimal angepasst werden. Es versteht sich, dass nicht nur die sogenannte Bodenseite geformt ist. Alternativ können auch weitere Seiten des Luftsackes geformt bzw. vorgeformt sein. Um eine Vielzahl der Stauraumbeladung abdecken zu können, sind auch mehrere und auch in Größe und Form verschiedene Luftsäcke im Stauraum einbringbar.

Der Luftsack kann in einer weiteren Ausgestaltung in Kammern unterteilt werden, sodass auch ein größerer Luftsack im Stauraum eingebunden werden kann und nur einige der Kammern dann befüllt werden. Hier sollte dann zwischen den Kammern ein Zwischenventil vorhanden sein oder jede Kammer über ein eigenes Ventil verfügen. Zur Befüllung des Luftsackes mit Gas oder Luft etc. dient ein vorzugsweise Standard Reifenbefüllventil. Aus Sicherheitsgründen kann der Balg auch mit einem Überdruckventil versehen werden. Der Balg oder Sack kann dann über jeden Reifenfüllschlauch und so auch über die fahrzeugeigne Reifendruckregelanlage befüllt werden. Zusätzliche Gasgeneratoren sind selbstverständlich nicht ausgeschlossen. Die Luft bzw. das Gas selbst kann jederzeit abgelassen und der Sack oder Balg ohne großen eigenen Platzbedarf zusammengefaltet verstaut werden. Das Zusammenfalten kann durch ein Absaugen der Luft bzw. des Gases unterstützt werden.

Die Vorrichtung zum Sichern von Gütern, Objekten etc. ist ihrerseits leicht, selbst im Gebrauch. Sie ist unabhängig der inneren Ausgestaltungen der Stauräume, verzichtet auf fahrzeugseitige Anbindungen zur Aufnahme von Gurte, Netze oder Rollos.

Vorgeschlagen wird eine Sicherungsvorrichtung für Ladegüter, Gepäckstücke oder sonstiger zu sichernder Objekte in einem Fahrzeug oder anderen Objekt, insbesondere in Stauräumen und Staukästen, wobei wenigstens ein entfalteter Luftsack im Stauraum eingebunden ist, der einen freien Raum zumindest teilweise bevorzugt vollständig ausfüllt, derart, dass die Objekte gegen Verrutschen, Verkanten etc. gesichert sind. Der Luftsack kann seinerseits unterschiedliche Geometrien aufweisen, die in der Regel die dem Freiraum im Stauraum geschuldet sind.

Anhand eines Ausführungsbeispiels mit Zeichnung soll die Erfindung näher erläutert werden. Es zeigt:
- Fig. 1 bis 4: Varianten von Formmöglichkeiten eines Luftsackes in einer perspektivischen Darstellung,
- Fig. 5: eine Darstellung eines möglichen Einbaus in einen Staukasten,
- Fig. 6: einen Luftsack im gefalteten Zustand.

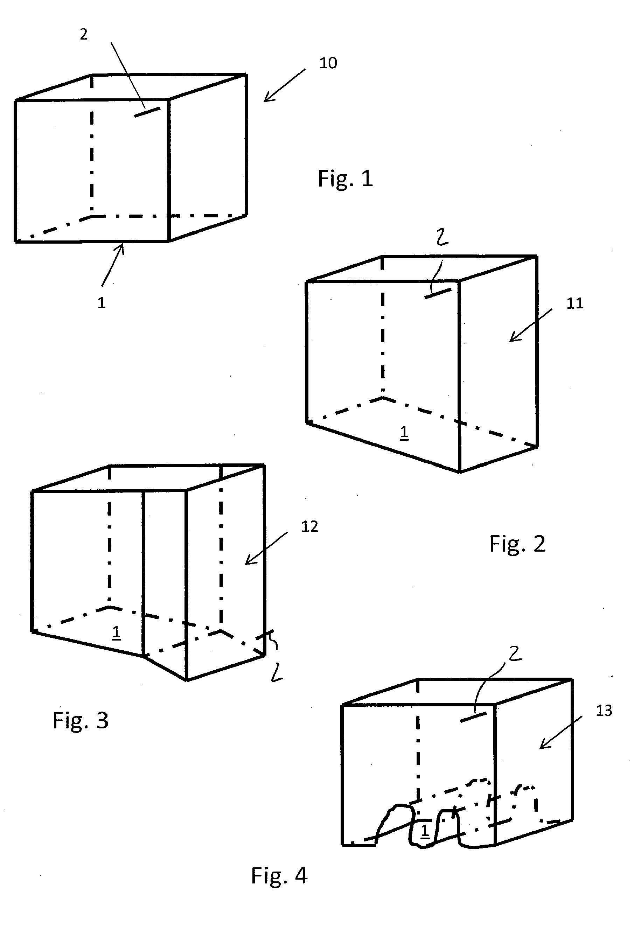

In den Fig. 1 bis 4 sind vier unterschiedliche Formgestaltungen eines vorrangig eckigen Luftsackes 10, 11, 12 und 13 dargestellt. Die Luftsäcke 10-13 befinden sich im befülltem Zustand und weisen zumindest eine geformte Boden- oder Unterseite 1 auf. Die erste Bodenform nach Fig. 1 kann als eben bezeichnet werden, die Varianten nach den Fig. 2 und 3 als schief und die Bodenform nach Fig. 4 als wellig. Weitere Formen und Grundgeometrien sind nicht nur denkbar, sondern auch vorgesehen. Dabei kann die Grundgeometrie dreieckig, zylindrisch, konisch, etc. sowie eine Pyramide, Kegel oder dergleichen nachbildend sein. Jeder Luftsack 10-13 besitzt wenigstens ein Ventil 2 zum Befüllen der Luftsäcke 10-13 (14) mit Gas und / oder Luft. Als Material für die Luftsäcke 10-13 (14) bietet sich gummiertes Gewebe wie Leinen, Flies etc. an. Andere Materialien können aber auch reines Gummi, oder andere bekannte Luftsackmaterialien sein.

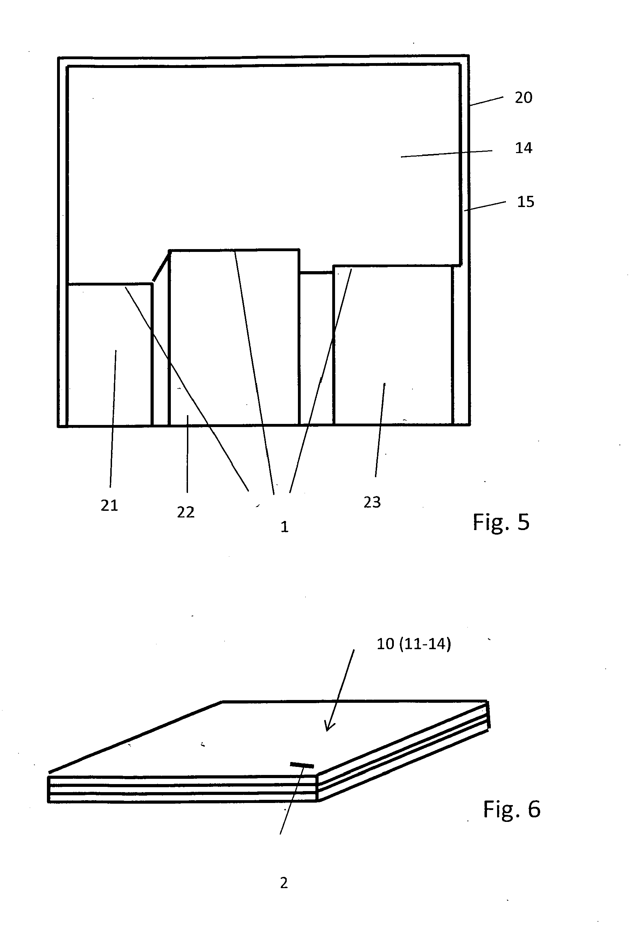

Fig. 5 zeigt eine Aufsicht auf einen offenen Staukasten 20. Dieser enthält Güter 21, 22, 23 die - je nach Betrachtung - im Staukasten 20 liegen oder stehen können. Die Güter 21-23 werden durch wenigstens einen Luftsack 14 in ihren Positionen gehalten, das heißt fixiert, der seinerseits den größten Teil eines Freiraumes 15 im Staukasten 20 ausfüllt. Alternativ können aber auch mehrere Luftsäcke eingebunden werden (nicht näher dargestellt).

Als bevorzugt hat sich gezeigt, wenn zumindest die Seiten, die gegen die Güter 21-23 gedrückt werden, zumindest aber Boden- oder Unterseite 1 eine raue Oberfläche, beispielsweise in Form von Noppen, Aufrauhungen, Gummierungen oder dergleichen auf der Oberfläche, aufweisen (nicht näher dargestellt), wodurch eine verbesserte Fixierung erreicht werden kann.

Das Befüllen kann außerhalb des Stauraums oder Staukastens 20 erfolgen oder im eingebundenen Zustand. Letztere hat den Vorteil, dass ein Spielraum zwischen Luftsack 10-14 und den Gütern 21-23 selbst vermieden werden kann.

Fig. 6 zeigt einen Luftsack 10 (11-14) im zusammengefalteten Zustand.

## Patentansprüche

1. Sicherungsvorrichtung für Ladegüter, Gepäckstücke oder sonstiger zu sichernder Objekte (21, 22, 23) in einem Fahrzeug, insbesondere in Stauräumen und Staukästen (20), **dadurch gekennzeichnet, dass** wenigstens ein entfalteter Luftsack (10-14) im Stauraum (20) eingebunden ist, der einen freien Raum (15) zumindest teilweise bevorzugt vollständig ausfüllt, derart, dass die Objekte (21, 22, 23) gegen Verrutschen, Verkanten etc. gesichert sind.

2. Sicherungsvorrichtung nach Anspruch 1, **dadurch gekennzeichnet, dass** der Luftsack (10-14) unterschiedliche Geometrien aufweisen kann, die dem Freiraum (15) im Stauraum (20) geschuldet sind.

3. Sicherungsvorrichtung nach Anspruch 1 oder 2, **dadurch gekennzeichnet, dass** zumindest die den Gütern (21, 22, 23) zugewandte Seite(n) (1) eine raue Oberfläche aufweisen.

4. Sicherungsvorrichtung nach einem der Ansprüche 1 bis 3, **dadurch gekennzeichnet, dass** das Material des Luftsackes (10-14) gummiertes Gewebe ist.

5. Sicherungsvorrichtung nach einem der Ansprüche 1 bis 4, **dadurch gekennzeichnet, dass** der Luftsack (10-14) in einzelne Kammern unterteilt sein kann.

6. Sicherungsvorrichtung nach Anspruch 5, **dadurch gekennzeichnet, dass** zwischen den Kammern jeweils zumindest ein Ventil eingebunden ist oder jede Kammer über zumindest ein eigenes Ventil (2) zur Befüllung verfügt.
